# EUROPÄISCHE PATENTSCHRIFT

(11) **EP 3 040 531 B1**
(45) Veröffentlichungstag und Bekanntmachung des Hinweises auf die Patenterteilung: **21.02.2018**
(21) Anmeldenummer: 15003512.9
(22) Anmeldetag: 10.12.2015
(51) Int. Cl.: F01N 11/00, F01N 9/00, F01N 3/021, F01N 3/023

(54) **VERFAHREN ZUM BETREIBEN EINER ABGASREINIGUNGSEINRICHTUNG SOWIE ENTSPRECHENDE ABGASREINIGUNGSEINRICHTUNG**
METHOD FOR OPERATING AN EXHAUST GAS CLEANING DEVICE AND CORRESPONDING EXHAUST GAS CLEANING DEVICE
PROCÉDÉ DE FONCTIONNEMENT D'UN DISPOSITIF DE NETTOYAGE DE GAZ D'ÉCHAPPEMENT ET DISPOSITIF DE NETTOYAGE DE GAZ D'ÉCHAPPEMENT

(30) Priorität: 31.12.2014 DE 102014019642
(43) Veröffentlichungstag der Anmeldung: 06.07.2016
(73) Patentinhaber: AUDI AG, 85045 Ingolstadt (DE)
(72) Erfinder: Odendall, Bodo, DE - 85101 Lenting (DE)

(56) Entgegenhaltungen:
- EP-A1- 1 316 693
- DE-A1-102007 042 420
- DE-A1-102014 209 840

## Beschreibung

Die Erfindung betrifft ein Verfahren zum Betreiben einer Abgasreinigungseinrichtung mit einem Partikelfilter, wobei mittels Drucksensoren ein Istdruckverlust über den Partikelfilter ermittelt wird und anhand wenigstens einer Zustandsgröße, nämlich eines Abgasmassenstroms,
ein Modelldruckverlust bestimmt wird, wobei anhand des Istdruckverlusts und des Modelldruckverlusts ein Druckquotient ermittelt und in einem Diagnosebetrieb anhand des Druckquotients auf einen Zustand des Partikelfilters geschlossen wird, wobei ein Istwert gleich dem Istdruckverlust und ein Modellwert gleich dem Modelldruckverlust gesetzt wird. Die Erfindung betrifft weiterhin eine Abgasreinigungseinrichtung.

Die Abgasreinigungseinrichtung ist beispielsweise zur Verwendung mit einer Antriebseinrichtung, insbesondere eines Kraftfahrzeugs, vorgesehen. Die Antriebseinrichtung weist eine abgaserzeugende Einrichtung, beispielsweise eine Brennkraftmaschine auf. Das während des Betriebs der Antriebseinrichtung anfallende Abgas wird abgeführt, vorzugsweise in Richtung einer Außenumgebung der Antriebseinrichtung. Aus diesem Grund ist die Abgasreinigungseinrichtung vorgesehen, durch welche das von der abgaserzeugenden Einrichtung kommende Abgas geleitet wird, bevor es weiter in Richtung der Außenumgebung abgeführt wird. Die Abgasreinigungseinrichtung dient dabei der Reinigung des Abgases.

Die Abgasreinigungseinrichtung verfügt über den Partikelfilter, mittels welchem in dem Abgas enthaltene Partikel herausgefiltert werden. Das bedeutet, dass sich die Partikel, beispielsweise Rußpartikel oder dergleichen, in dem Partikelfilter ansammeln. Erreicht eine Beladung des Partikelfilters mit den Partikeln einen Beladungsgrenzwert, so wird vorzugsweise ein Regenerationsbetrieb durchgeführt, bei welchem die Temperatur des Partikelfilters derart erhöht wird, dass die Partikel beziehungsweise Rußpartikel verbrennen. Beispielsweise wird zu diesem Zweck die Brennkraftmaschine entsprechend angesteuert. Während der Durchführung des Regenerationsbetriebs werden die Partikel zwar verbrannt, es kann jedoch vorkommen, dass bei der Verbrennung entstehende Asche in dem Partikelfilter verbleibt. Diese Asche kann während des Betriebs der Abgasreinigungseinrichtung und/oder während des Regenerationsbetriebs nicht aus dem Partikelfilter herausbefördert werden.

Zur Überwachung des Partikelfilters, insbesondere des Füllstands des Partikelfilters, wird der Istdruckverlust über den Partikelfilter hinweg ermittelt. Zu diesem Zweck sind Drucksensoren vorgesehen, wobei beispielsweise ein erster der Drucksensoren unmittelbar stromaufwärts des Partikelfilters und ein zweiter der Drucksensoren unmittelbar stromabwärts des Partikelfilters angeordnet ist. Aus den mit Hilfe der Drucksensoren gemessenen Istdrücke kann nun der Istdruckverlust berechnet werden. Anhand des Istdruckverlusts kann auf den Zustand des Partikelfilters geschlossen werden.

Aus dem Stand der Technik ist beispielsweise die Druckschrift DE 10 2010 038 189 A1 bekannt. Diese betrifft ein Verfahren zum Bestimmen der Filterungseffizienz eines Partikelfilters im Abluftsystem eines Kraftfahrzeugs.

Weiterhin ist aus der Druckschrift EP 1 316 693 A1 ein Verfahren zur Diagnose des Zustands des Betriebs einer Abgasleitung eines Verbrennungsmotors bekannt, die mit einem Partikelfilter ausgestattet ist, umfassend die Schritte der Messung des Differenzialdrucks, der zwischen der Seite vor und der Seite nach dem Partikelfilter herrscht, der Berechnung eines Diagnoseparameters, ausgehend vom Wert des gemessenen Differenzialdrucks und der Verarbeitung des Diagnoseparameters zur Entdeckung einer Funktionsstörung des Partikelfilters. Dabei ist vorgesehen, dass man nach der Messung des Differenzialdrucks einen Schritt der Ermittlung von pumpenstabilen Betriebs des Motors durchführt und man den Diagnoseparameter im Fall stabilen Betriebs des Motors berechnet. Weiterhin beschreibt die Druckschrift DE 10 2007 042 420 A1 ein Verfahren zur Überwachung eines Partikelfilters, bei dem eine einen zumindest weitgehend unbeladenen Partikelfilter charakterisierende, temperaturabhängige Differenzdruck-Volumenstrom-Kennlinie in eine temperaturunabhängige Differenzdruck-Volumenstrom-Kennlinie umgewandelt wird, mittels derer mindestens ein Parameter des Partikelfilters bestimmt und/oder überwacht wird.

Es ist nun Aufgabe der Erfindung, ein Verfahren zum Betreiben einer Abgasreinigungseinrichtung vorzuschlagen, welche gegenüber anderen Verfahren Vorteile aufweist, insbesondere eine zuverlässigere Diagnose des Partikelfilters beziehungsweise eine zuverlässigere Bestimmung des Zustandes des Partikelfilters ermöglicht.

Dies wird erfindungsgemäß mit einem Verfahren mit dem Merkmal des Anspruchs 1 erreicht. Dabei ist vorgesehen, dass der Modellwert und der Istwert vor dem Ermitteln des Druckquotients bandpassgefiltert und anschließend vorzeichenbereinigt oder quadriert werden, wobei nachfolgend aus dem Modellwert ein Modellintegralwert über der Zeit und aus dem Istwert ein Istintegralwert über der Zeit gebildet wird, und wobei der Druckquotient als Quotient von Istintegralwert und Modellintegralwert vorliegt. Grundsätzlich ist vorgesehen, dass anhand wenigstens einer Zustandsgröße, nämlich eines Abgasmassenstroms, ein Modelldruckverlust bestimmt wird, wobei anhand des Istdruckverlusts und des Modelldruckverlusts ein Druckquotient ermittelt und in einem Diagnosebetrieb anhand des Druckquotients auf einen Zustand des Partikelfilters geschlossen wird.

Neben dem gemessenen Istdruckverlust wird insoweit der Modelldruckverlust ermittelt. Zu diesem Zweck wird die wenigstens eine Zustandsgröße herangezogen. Vorzugsweise beschreibt der Modelldruckverlust den Druckverlust über den Partikelfilter unabhängig von dessen Zustand beziehungsweise dessen Beladung. Der Modelldruckverlust beschreibt insoweit den Druckverlust eines neuen, unbeladenen und vollständig funktionsbereiten Partikelfilters in Abhängigkeit von der Zustandsgröße. Als Zustandsgröße wird wenigstens einen Abgasmassenstrom herangezogen, wobei darüber hinaus beispielsweise die Abgastemperatur oder dergleichen zusätzlich herangezogen werden können. Besonders bevorzugt wird bei der Bestimmung des Modelldruckverlusts auf mehrere der Zustandsgrößen, insbesondere alle Zustandsgrößen, zurückgegriffen.

Nach der Bestimmung des Modelldruckverlusts wird der Istdruckverlust in Relation zu dem Modelldruckverlust betrachtet. Zu diesem Zweck wird der Druckquotient ermittelt, welcher sich zum Beispiel durch Division des Istdruckverlusts durch den Modelldruckverlust ergibt. Der Druckquotient spiegelt also wieder, welches Verhältnis zwischen dem tatsächlich vorliegenden Istdruckverlust und dem theoretisch bei einem unbeladenen Partikelfilter auftretenden Modelldruckverlust vorliegt. Entsprechend kann anhand des Druckquotients auf den Zustand des Partikelfilters geschlossen werden.

Eine weitere Ausgestaltung der Erfindung sieht vor, dass ein Istwert gleich dem Istdruckverlust und/oder ein Modellwert gleich dem Modelldruckverlust gesetzt wird, wobei der Druckquotient als Quotient von Istwert und Modellwert vorliegt. Der gemessene Istdruckverlust wird insoweit in Form des Istwerts und/oder der modellierte Modelldruckverlust in Form des Modellwerts zwischengespeichert. Anschließend wird der Druckquotient berechnet, indem der Quotient von Istwert und Modellwert berechnet wird, wobei der Druckquotient als Ergebnis der Division des Istwerts durch den Modellwert vorliegt. Aufgrund von Bauteiltoleranzen und/oder dynamischen Betriebszuständen kann die unmittelbare Bildung des Druckquotients aus Istwert und Modellwert jedoch problematisch sein. Hierauf wird im Folgenden eingegangen.

Eine bevorzugte Ausgestaltung der Erfindung sieht vor, dass der Modellwert und/oder der Istwert vor dem Ermitteln des Druckquotients bandpassgefiltert werden. Das bedeutet, dass entweder der Modellwert, der Istwert oder sowohl der Modellwert und der Istwert jeweils mit einem Bandpassfilter beaufschlagt werden. Mittels des Bandpassfilters werden im Frequenzspektrum des Modellwerts und/oder des Istwerts sowohl tiefe als auch hohe Frequenzen herausgefiltert. Durch das Herausfiltern der tiefen Frequenzen wird das Signal vom Mittelwert und somit insbesondere von einem Offset beziehungsweise Offsetfehler befreit. Dadurch wird der Einfluss von Bauteiltoleranzen, beispielsweise der Drucksensoren eliminiert. Insbesondere wird also ein Offsetfehler der Drucksensoren korrigiert. Weiterhin kann der negative Effekt einer Temperaturdrift der Drucksensoren auf das Ergebnis der Zustandsprüfung des Partikelfilters ausgeschlossen werden. Das Herausfiltern der hohen Frequenzen vermindert einen Störeinfluß, welcher beispielsweise durch ein Signalrauschen hervorgerufen werden kann.

Eine Weiterbildung der Erfindung sieht vor, dass der Bandpassfilter eine Untergrenze eines Durchlassbereichs von 0,1 Hz bis 1 Hz und/oder eine Obergrenze des Durchlassbereichs von 1 Hz bis 10 Hz aufweist. Wie bereits vorstehend erläutert, filtert der Bandpassfilter sowohl tiefe als auch hohe Frequenzen heraus. Durchlässig ist der Bandpassfilter lediglich innerhalb des Durchlassbereichs, welcher von der Untergrenze und der Obergrenze definiert beziehungsweise eingeschlossen ist. Der Bandpassfilter filtert insoweit alle Frequenzen heraus, welche unterhalb der Untergrenze und/oder oberhalb der Obergrenze liegen. Als Untergrenze des Durchlassbereichs können Werte von 0,1 Hz bis 1 Hz, beispielsweise von 0,4 Hz bis 0,7 Hz oder von 0,5 bis 0,6 Hz herangezogen werden. Die Obergrenze des Durchlassbereichs liegt beispielsweise in einem Bereich von 1 Hz bis 10 Hz, insbesondere von 3 Hz bis 8 Hz, oder 5 Hz bis 6 Hz.

In einer weiteren bevorzugten Ausgestaltung der Erfindung ist vorgesehen, dass der Modellwert und/oder Istwert vor dem Ermitteln des Druckquotient vorzeichenbereinigt oder quadriert werden. Das bedeutet, dass entweder der Modellwert, der Istwert oder sowohl der Modellwert als auch der Istwert vor dem Ermitteln des Druckquotients jeweils mit einer mathematischen Funktion beaufschlagt werden. Dabei findet beispielsweise die Vorzeichenbereinigung des Modellwerts und/oder des Istwerts, also die Bildung des jeweiligen Absolutwerts statt. Alternativ kann im Rahmen der mathematischen Beziehung auch eine Quadrierung des Modellwerts und/oder des Istwerts vorgenommen werden. Auch hierdurch ergibt sich eine Vorzeichenbereinigung. Selbstverständlich können auch andere mathematische Funktionen herangezogen werden, insbesondere insoweit sie eine Vorzeichenbereinigung des Modellwerts und/oder des Istwerts bewirken.

In einer weiteren bevorzugten Ausgestaltung der Erfindung ist vorgesehen, dass aus dem Modellwert ein Modellintegralwert über der Zeit und/oder aus dem Istwert ein Istintegralwert über der Zeit gebildet wird, wobei der Druckquotient als Quotient von Istintegralwert und Modellintegralwert vorliegt. Der Druckquotient wird nun also nicht dem Quotient von Istwert und Modellwert gleichgesetzt, sondern vielmehr dem Quotient aus den entsprechenden integrierten Werten, nämlich dem Istintegralwert und dem Modellintegralwert. Zur Bildung des Modellintegralwerts wird der Modellwert über der Zeit intergiert, auf analoge Weise entspricht der Istintegralwert dem Integral des Istwerts über der Zeit. Durch die Integration des Modellwerts und/oder des Istwerts werden die Auswirkungen von kurzfristigen Störungen minimiert.

Besonders bevorzugt wird das Integrieren des Modellwerts zu dem Modellintegralwert und/oder das Integrieren des Istwerts zu dem Istintegralwert vorgenommen, insbesondere nur dann, wenn wenigstens eine der folgenden Bedingungen erfüllt ist: Der Abgasmassenstrom weist Änderungen auf; und/oder die Abgastemperatur ist größer als ein erster Temperaturschwellenwert und/oder kleiner als ein zweiter Temperaturschwellenwert; und/oder der Abgasmassenstrom ist größer als ein erster Massenstromschwellenwert und/oder kleiner als ein zweiter Massenstromschwellenwert; und/oder ein Abgasmassenstromintegral ist größer als ein Abgasmassenstromintegralschwellenwert. Bereits eine einzige der genannten Bedingungen kann ausreichend sein. Besonders bevorzugt müssen jedoch mehrere, insbesondere alle, der Bedingungen erfüllt sein. Ist die Bedingung beziehungsweise sind die Bedingungen nicht erfüllt, so wird beispielsweise die Integration ausgesetzt, sodass der Istintegralwert und/oder der Modellintegralwert auf ihren derzeitigen Werten verharren.

Der Abgasmassenstrom ist der Massenstrom des Abgases, welches die Abgasreinigungseinrichtung durchströmt. Die Integration wird nun nur dann vorgenommen, wenn sich der Abgasmassenstrom während des Zeitintervalls, über welches integriert wird, geändert hat. Der zweite Temperaturschwellenwert ist vorzugsweise größer als der erste Temperaturschwellenwert. Entsprechendes gilt für den zweiten Massenstromschwellenwert und den ersten Massenstromschwellenwert. Das Abgasmassenstromintegral ist das zeitliche Integral des Abgasmassenstroms, vorzugsweise seit dem letzten Betriebsbeginn. Hat das Abgasmassenstromintegral einen ausreichenden Wert erreicht, ist es also größer als der Abgasmassenstromintegralschwellenwert, so kann darauf geschlossen werden, dass eine sinnvolle Ermittlung des Istintegralwerts und/oder des Modellintegralwerts möglich ist.

In einer weiteren Ausgestaltung der Erfindung ist vorgesehen, dass bei einem Druckquotient, der kleiner ist als ein erster Grenzwert auf einen mechanischen Defekt des Partikelfilters oder auf eine Entfernung des Partikelfilters erkannt wird. Ist der Druckquotient kleiner als eins, so ist der mittels der Drucksensoren ermittelte Istdruckverlust kleiner als der Modelldruckverlust, welcher einem idealen, unbeladenen Partikelfilter entspricht. Unterschreitet nun der Druckquotient den ersten Grenzwert, so kann darauf geschlossen werden, dass der Partikelfilter entweder einen Defekt, insbesondere einen mechanischen Defekt aufweist, oder aber entfernt wurde, also nicht zwischen den Drucksensoren angeordnet ist. Unter dem mechanischen Defekt ist beispielsweise eine Perforierung des Partikelfilters zu verstehen. Der erste Grenzwert ist vorzugsweise kleiner oder gleich 1. Beispielsweise beträgt er höchstens 0,9, höchstens 0,8, höchstens 0,7, höchstens 0,6, höchstens 0,5, höchstens 0,4, höchstens 0,3, höchstens 0,25, höchstens 0,2 oder höchstens 0,1.

Eine weitere bevorzugte Ausführungsform der Erfindung sieht vor, dass bei einem Druckquotienten, der größer ist als ein zweiter Grenzwert, auf eine hohe Beladung des Partikelfilters erkannt wird. Analog zu den vorstehenden Ausführungen ist der zweite Grenzwert vorzugsweise größer oder gleich eins. Beispielsweise ist der zweite Grenzwert größer als 1,1, größer als 1,2, größer als 1,3, größer als 1,4, größer als 1,5, größer als 1,75, größer als 2,0, größer als 2,5 oder größer als 3,0. Tritt ein derartige Druckquotient auf, so kann darauf geschlossen werden, dass der Partikelfilter eine hohe Beladung mit Partikeln, insbesondere Rußpartikeln und/oder Aschepartikeln, aufweist.

Beispielsweise ist vorgesehen, dass bei hoher Beladung des Partikelfilters ein Regenerationsbetrieb durchgeführt wird. Ist also der Druckquotient größer als der zweite Grenzwert, so wird möglichst rasch, vorzugsweise unmittelbar, der Regenerationsbetrieb eingeleitet. Während des Regenerationsbetriebs werden die in dem Partikelfilter vorliegenden Partikel beispielsweise verbrannt, sodass die Beladung abnimmt. Es kann vorgesehen sein, dass eine Differenz zwischen dem Druckquotient vor dem Regenerationsbetrieb und einem Druckquotient nach dem Regenerationsbetrieb gebildet wird. Ist diese kleiner als eine Differenzschwelle, so wird auf einen zugesetzten Partikelfilter erkannt.

Wie bereits vorstehend erläutert, fällt während des Regenerationsbetriebs Asche an, welche in dem Partikelfilter verbleibt. Sobald der Partikelfilter mit Asche zugesetzt ist beziehungsweise eine zu hohe Beladung aufweist, muss der Partikelfilter ausgetauscht werden. Wird also auf den zugesetzten Partikelfilter erkannt, so wird dies vorzugsweise einem Fahrer des Kraftfahrzeugs angezeigt.

Schließlich ist in einer weiteren Ausgestaltung der Erfindung vorgesehen, dass der Diagnosebetrieb durchgeführt wird, wenn eine Beobachtungszeit größer ist als eine Mindestbeobachtungszeit, ein Integrationszeitraum größer ist als ein Mindestintegrationszeitraum, ein Antriebsdrehmoment einer Antriebseinrichtung größer als ein Mindestdrehmoment und/oder kleiner als ein Höchstdrehmoment und/oder eine Drehzahl der Antriebseinrichtung größer als eine Mindestdrehzahl und/oder kleiner als eine Höchstdrehzahl ist. Bevorzugt wird lediglich in dem Diagnosebetrieb anhand des Druckquotients auf den Zustand des Partikelfilters geschlossen. Das Ermitteln des Istdruckverlusts mittels der Drucksensoren sowie das Bestimmen des Modelldruckverlusts anhand der wenigstens einer Zustandsgröße sowie das darauf folgende Ermitteln des Druckquotients wird jedoch vorzugsweise regelmäßig, insbesondere permanent, vorgenommen.

Der Diagnosebetrieb wird beispielsweise lediglich dann durchgeführt, wenn bestimmte Rahmenbedingungen eine erfolgreiche Diagnose des Partikelfilters erwarten lassen. Dabei werden beispielsweise Parameter wie die Beobachtungszeit, das Antriebsdrehmoment und/oder die Drehzahl betrachtet. Liegen einer oder mehrere, vorzugsweise alle, der genannten Parameter in einem bestimmten Bereich, so wird der Diagnosebetrieb eingeleitet beziehungsweise durchgeführt.

Insbesondere ist es notwendig, dass die Beobachtungszeit größer ist als die Mindestbeobachtungszeit um eine ausreichende Datenbasis für die Diagnose zur Verfügung zu haben. Beispielsweise läuft die Beobachtungszeit stets dann, wenn die Abgasreinigungseinrichtung betrieben wird, also der Partikelfilter von Abgas durchströmt wird. Im Rahmen einer weiteren Bedingung kann überprüft werden, ob der Integrationszeitraum größer ist als der Mindestintegrationszeitraum. Der Integrationszeitraum entspricht demjenigen Zeitraum, während welchem bislang das Integrieren von Istwert und/oder Modellwert zu Istintegralwert beziehungsweise Modellintegralwert vorgenommen wurde. Der Integrationszeitraum entspricht insoweit den aufsummierten Zeitintervallen, während welchen das Integrieren durchgeführt wurde.

Zusätzlich oder alternativ kann es notwendig sein, dass das Antriebsdrehmoment zwischen dem Mindestdrehmoment und dem Höchstdrehmoment liegt, wobei diese voneinander verschieden sind. Das Mindestdrehmoment ist vorzugsweise größer als null, während das Höchstdrehmoment größer ist als das Mindestdrehmoment. Weiter kann vorausgesetzt werden, dass die Drehzahl der Antriebseinrichtung zwischen der Mindestdrehzahl und der Höchstdrehzahl liegt. Auch hier ist die Mindestdrehzahl größer als null, während die Höchstdrehzahl größer ist als die Mindestdrehzahl.

Zusätzlich oder alternativ können die im Rahmen der Integration beschriebenen Bedingungen herangezogen werden, sodass zumindest eine der folgenden Bedingungen erfüllt sein muss: Der Abgasmassenstrom weist Änderungen auf; und/oder die Abgastemperatur ist größer als ein erster Temperaturschwellenwert und/oder kleiner als ein zweiter Temperaturschwellenwert; und/oder der Abgasmassenstrom ist größer als ein erster Massenstromschwellenwert und/oder kleiner als ein zweiter Massenstromschwellenwert; und/oder ein Abgasmassenstromintegral ist größer als ein Abgasmassenstromintegralschwellenwert. Umgekehrt kann selbstverständlich wenigstens eine der hinsichtlich des Diagnosebetriebs beschriebenen Bedingungen herangezogen werden, um zu ermitteln, ob die Integration durchgeführt werden soll.

Die Erfindung betrifft weiterhin eine Abgasreinigungseinrichtung mit einem Partikelfilter, insbesondere zum Durchführen des Verfahrens gemäß den vorstehenden Ausführungen, wobei vorgesehen ist, mittels Drucksensoren einen Istdruckverlust über den Partikelfilter zu ermitteln. Dabei ist vorgesehen, dass die Abgasreinigungseinrichtung dazu ausgebildet ist, anhand wenigstens einer Zustandsgröße, nämlich eines Abgasmassenstroms, einen Modelldruckverlust zu bestimmen, wobei anhand des Istdruckverlusts und des Modelldruckverlusts ein Druckquotient ermittelt und in einem Diagnosebetrieb anhand des Druckquotients auf einen Zustand des Partikelfilters geschlossen wird.

Auf die Vorteile einer derartigen Vorgehensweise beziehungsweise einer derartigen Ausgestaltung der Abgasreinigungseinrichtung wurde bereits eingegangen. Sowohl die Abgasreinigungseinrichtung als auch das Verfahren können gemäß den vorstehenden Ausführungen weitergebildet sein, sodass insoweit auf diese verwiesen wird.

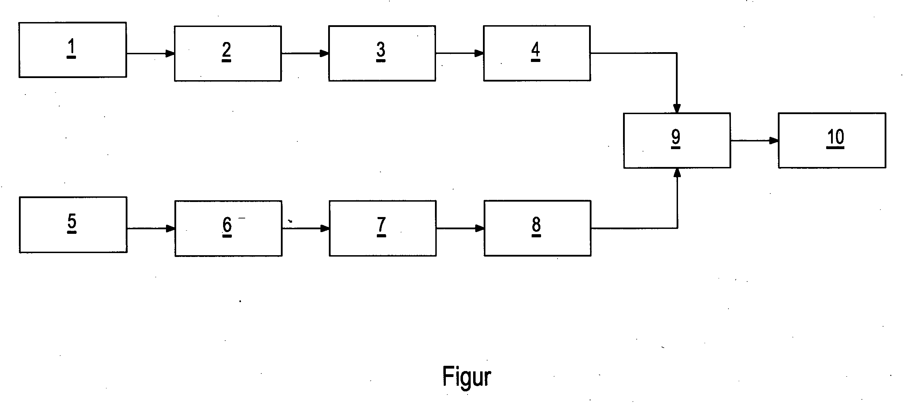

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur 1: ein Ablaufdiagram eines Verfahrens zum Betreiben einer Abgasreinigungseinrichtung.

Die Figur zeigt ein Ablaufdiagram, welches die Vorgehensweise im Rahmen eines Verfahrens zum Betreiben einer Abgasreinigungseinrichtung wiedergibt. Die Abgasreinigungseinrichtung verfügt über einen Partikelfilter, mittels welchem Partikel aus Abgas gefiltert wird, welches die Abgasreinigungseinrichtung durchströmt. Die Abgasreinigungseinrichtung ist beispielsweise Bestandteil einer Antriebseinrichtung, welche neben der Abgasreinigungseinrichtung eine abgaserzeugende Einrichtung, insbesondere eine Brennkraftmaschine, aufweist.

Im Rahmen einer Operation 1 ist es zunächst vorgesehen, mittels Drucksensoren einen Istdruckverlust über den Partikelfilter zu ermitteln. Zu diesem Zweck wird beispielsweise der Druck stromaufwärts sowie stromabwärts des Partikelfilters gemessen und anschließend durch Bildung der Differenz aus den Drücken der Istdruckverlust bestimmt. Ebenfalls im Rahmen der Operation 1 wird ein Istwert gleich dem Istdruckverlust gesetzt. Im Rahmen einer Operation 2 wird nun der Istwert bandpassgefiltert, also durch einen Bandpassfilter geführt. Der auf dieser Art und Weise erlangte Istwert wird im Rahmen einer Operation 3 vorzeichenbereinigt und/oder quadriert. Der wiederum auf dieser Art und Weise erhaltene Istwert wird über der Zeit integriert, sodass sich ein Istintegralwert ergibt.

Das Integrieren wird beispielsweise nur dann durchgeführt, wenn eine oder mehrere der folgenden Bedingungen erfüllt sind: Der Abgasmassenstrom weist Änderungen auf; und/oder die Abgastemperatur ist größer als ein erster Temperaturschwellenwert und/oder kleiner als ein zweiter Temperaturschwellenwert; und/oder der Abgasmassenstrom ist größer als ein erster Massenstromschwellenwert und/oder kleiner als ein zweiter Massenstromschwellenwert; und/oder ein Abgasmassenstromintegral ist größer als ein Abgasmassenstromintegralschwellenwert.

In analoger Art und Weise wird für einen Modelldruckverlust vorgegangen, welcher im Rahmen einer Operation 5 aus wenigstens einer Zustandsgröße ermittelt wird. Die Zustandsgröße ist der Abgasmassenstrom. Als weitere Zustandsgröße kann zum Bestimmen des Modelldruckverlusts die Abgastemperatur herangezogen werden. Der Modelldruckverlust liegt insoweit beispielsweise als Funktion des Abgasmassenstromes und/oder der Abgastemperatur vor. Nachfolgend wird ein Modellwert gleich dem Modelldruckverlust gesetzt.

Dieser Modellwert wird im Rahmen einer Operation 6 bandpassgefiltert, wobei beispielsweise der dabei verwendete Bandpassfilter denselben Durchlassbereich, also dieselbe Untergrenze sowie dieselbe Obergrenze des Durchlassbereichs aufweist, wie der im Rahmen der Operation 2 verwendete Bandpassfilter. Der auf dieser Art und Weise erlangte Modellwert wird im Rahmen einer Operation 7 vorzeichenbereinigt und/oder quadriert. Dabei wird dieselbe Vorgehensweise herangezogen wie für den Istwert im Rahmen der Operation 3. Der wiederum erlangte Modellwert wird im Rahmen einer Operation 8 über der Zeit integriert, woraus sich ein Modellintegralwert ergibt. Auch für den Modellintegralwert kann es vorgesehen sein, dass das Integrieren nur vorgenommen wird, wenn eine oder mehrere der vorstehend für das Integrieren des Istwerts genannten Bedingungen erfüllt sind. Besonders vorteilhaft ist es, wenn das Integrieren für den Modellwert durchgeführt wird, insbesondere nur dann durchgeführt wird, wenn das Integrieren für den Istwert erfolgt.

In einer Operation 9 wird ein Druckquotient ermittelt, wobei dies für das vorliegende Ausführungsbeispiel durch Division des Istintegralwerts durch den Modellintegralwert erfolgt. Anschließend wird anhand des so erhaltenen Druckquotients auf den Zustand des Partikelfilters geschlossen. Beispielsweise wird bei einem Druckquotient, der kleiner als ein erster Grenzwert ist, auf einen mechanischen Defekt des Partikelfilters oder eine Entfernung des Partikelfilters erkannt. Dagegen wird bei einem Druckquotient, der größer ist als ein zweiter Grenzwert, auf eine hohe Beladung des Partikelfilters erkannt. Vorzugsweise ist der erste Grenzwert kleiner als eins, während der zweite Grenzwert größer als eins ist. Insbesondere ist jedoch der zweite Grenzwert größer als der erste Grenzwert.

Mit Hilfe der vorstehend beschriebenen Vorgehensweise kann eine äußerst zuverlässige Diagnose des Partikelfilters vorgenommen werden, sodass eine hohe Beladung und/oder ein Defekt des Partikelfilters rasch und effizient erkannt werden können.

## Patentansprüche

1. Verfahren zum Betreiben einer Abgasreinigungseinrichtung mit einem Partikelfilter, wobei mittels Drucksensoren ein Istdruckverlust über den Partikelfilter ermittelt und anhand wenigstens einer Zustandsgröße, nämlich eines Abgasmassenstroms, ein Modelldruckverlust bestimmt wird, wobei anhand des Istdruckverlusts und des Modelldruckverlusts ein Druckquotient ermittelt und in einem Diagnosebetrieb anhand des Druckquotients auf einen Zustand des Partikelfilters geschlossen wird, wobei ein Istwert gleich dem Istdruckverlust und ein Modellwert gleich dem Modelldruckverlust gesetzt wird, **dadurch gekennzeichnet, dass** der Modellwert und der Istwert vor dem Ermitteln des Druckquotients bandpassgefiltert und anschließend vorzeichenbereinigt oder quadriert werden, wobei nachfolgend aus dem Modellwert ein Modellintegralwert über der Zeit und aus dem Istwert ein Istintegralwert über der Zeit gebildet wird, und wobei der Druckquotient als Quotient von Istintegralwert und Modellintegralwert vorliegt.

2. Verfahren nach Anspruch 1, **dadurch gekennzeichnet, dass** der Bandpassfilter eine Untergrenze eines Durchlassbereichs von 0,1 Hz bis 1 Hz und/oder Obergrenze des Durchlassbereichs von 1 Hz bis 10 Hz aufweist.

3. Verfahren nach einem der vorherigen Ansprüche, **dadurch gekennzeichnet, dass** bei einem Druckquotient, der kleiner ist als ein erster Grenzwert, auf einen mechanischen Defekt des Partikelfilters oder auf eine Entfernung des Partikelfilters erkannt wird.

4. Verfahren nach einem der vorherigen Ansprüche, **dadurch gekennzeichnet, dass** bei einem Druckquotient, der größer ist als ein zweiter Grenzwert, auf eine hohe Beladung des Partikelfilters erkannt wird.

5. Verfahren nach einem der vorherigen Ansprüche, **dadurch gekennzeichnet, dass** der Diagnosebetrieb durchgeführt wird, wenn eine Beobachtungszeit größer ist als eine Mindestbeobachtungszeit, ein Integrationszeitraum größer ist als ein Mindestintegrationszeitraum, ein Antriebsdrehmoment einer Antriebseinrichtung größer als ein Mindestdrehmoment und/oder kleiner als ein Höchstdrehmoment und/oder eine Drehzahl der Antriebseinrichtung größer als eine Mindestdrehzahl und/oder kleiner als eine Höchstdrehzahl ist.

6. Abgasreinigungseinrichtung mit einem Partikelfilter, insbesondere zum Durchführen des Verfahrens nach einem oder mehreren der vorhergehenden Ansprüche, wobei vorgesehen ist, mittels Drucksensoren einen Istdruckverlust über den Partikelfilter zu ermitteln, wobei die Abgasreinigungseinrichtung dazu ausgebildet ist, anhand wenigstens einer Zustandsgröße, nämlich eines Abgasmassenstroms, einen Modelldruckverlust zu bestimmen, wobei anhand des Istdruckverlusts und des Modelldruckverlusts ein Druckquotient ermittelt und in einem Diagnosebetrieb anhand des Druckquotients auf einen Zustand des Partikelfilters geschlossen wird, wobei ein Istwert gleich dem Istdruckverlust und ein Modellwert gleich dem Modelldruckverlust gesetzt wird, **dadurch gekennzeichnet, dass** der Modellwert und der Istwert vor dem Ermitteln des Druckquotients bandpassgefiltert und anschließend vorzeichenbereinigt oder quadriert werden, wobei nachfolgend aus dem Modellwert ein Modellintegralwert über der Zeit und aus dem Istwert ein Istintegralwert über der Zeit gebildet wird, und wobei der Druckquotient als Quotient von Istintegralwert und Modellintegralwert vorliegt.

## Claims

1. Method for operating an exhaust gas cleaning device with a particle filter, wherein an actual pressure loss through the particle filter is determined by means of pressure sensors and a model pressure loss is calculated with the aid of at least one state variable, namely an exhaust gas mass flow, wherein with the aid of the actual pressure loss and the model pressure loss a pressure quotient is determined and the state of the particle filter is established in a diagnostics operation with the aid of the pressure quotient, wherein an actual value is set equal to the actual pressure loss and a model value is set equal to the model pressure loss, **characterised in that** the model value and the actual value are bandpass filtered before the determination of the pressure quotient and the sign is then corrected or squared, wherein following this a model integral value over time is formed from the model value and an actual integral value over time is formed from the actual value, and wherein the pressure quotient is the quotient of the actual integral value and model integral value.

2. Method according to claim 1, **characterised in that** the bandpass filter has a lower limit of a pass-band range from 0.1 Hz to 1 Hz and/or an upper limit of the pass-band range from 1 Hz to 10 Hz.

3. Method according to any one of the preceding claims, **characterised in that** if a pressure quotient is found to be less than a first limiting value, this denotes a mechanical defect of the particle filter or a removal of the particle filter.

4. Method according to any one of the preceding claims, **characterised in that** if a pressure quotient is found to be larger than a second limiting value, this denotes a high loading of the particle filter.

5. Method according to any one of the preceding claims, **characterised in that** the diagnostics operation is carried if an observation time is greater than a minimum observation time, an integration period is greater than a minimum integration period, a drive torque of a drive device is greater than a minimum torque and/or less than a maximum torque and/or a rotational speed of the drive device is greater than a minimum rotational speed and/or less than a maximum rotational speed.

6. Exhaust gas cleaning device with a particle filter, in particular for carrying out the method according to any one or more of the preceding claims, wherein it is envisaged that by means of pressure sensors an actual pressure loss through the particle filter is determined, wherein the exhaust gas cleaning device is designed so as to determine on the basis of at least one state variable, namely an exhaust gas mass flow, a model pressure loss, wherein on the basis of the actual pressure loss and the model pressure loss a pressure quotient is determined and in a diagnostics operation the state of the particle filter is established on the basis of the pressure quotient, wherein an actual value is set equal to the actual pressure loss and a model value is set equal to the model pressure loss, **characterised in that** the model value and the actual value are bandpass filtered before the determination of the pressure quotient and the sign is then corrected or squared, wherein following this a model integral value over time is formed from the model value and an actual integral value over time is formed from the actual value, and wherein the pressure quotient is the quotient of the actual integral value and model integral value.

## Revendications

1. Procédé de fonctionnement d'un dispositif de dépollution de gaz d'échappement avec un filtre à particules, dans lequel une perte de pression réelle dans le filtre à particules est déterminée au moyen de capteurs de pression et une perte de pression théorique est définie à l'aide d'au moins une grandeur d'état, à savoir un débit massique de gaz d'échappement, dans lequel un quotient de pression est déterminé à l'aide de la perte de pression réelle et de la perte de pression théorique et, dans un mode de fonctionnement de diagnostic, un état du filtre à particules est déduit du quotient de pression, dans lequel une valeur réelle est posée égale à la perte de pression réelle et une valeur théorique est posée égale à la perte de pression théorique, **caractérisé en ce que** la valeur théorique et la valeur réelle sont filtrées par un passe-bande avant la détermination du quotient de pression et sont ensuite débarrassées de leur signe ou élevées au carré, dans lequel ensuite une valeur intégrale théorique en fonction du temps est formée à partir de la valeur théorique et une valeur intégrale réelle en fonction du temps est formée à partir de la valeur réelle et dans lequel le quotient de pression se présente sous forme de quotient de la valeur intégrale réelle et de la valeur intégrale théorique.

2. Procédé selon la revendication 1, **caractérisé en ce que** le filtre passe-bande présente une limite inférieure d'une bande passante de 0,1 Hz à 1 Hz et/ou une limite supérieure de la bande passante de 1 Hz à 10 Hz.

3. Procédé selon l'une quelconque des revendications précédentes, **caractérisé en ce que**, en présence d'un quotient de pression qui est inférieur à une première valeur limite, on reconnaît un défaut mécanique du filtre à particules ou une absence du filtre à particules.

4. Procédé selon l'une quelconque des revendications précédentes, **caractérisé en ce que**, en présence d'un quotient de pression qui est supérieur à une deuxième valeur limite, on reconnaît une charge élevée du filtre à particules.

5. Procédé selon l'une quelconque des revendications précédentes, **caractérisé en ce que** le mode de fonctionnement de diagnostic est mis en oeuvre lorsqu'un temps d'observation est plus grand qu'un temps d'observation minimal, un intervalle de temps d'intégration est plus grand qu'un intervalle de temps d'intégration minimal, un couple moteur d'un dispositif de propulsion est plus grand qu'un couple moteur minimal et/ou plus petit qu'un couple moteur maximal et/ou une vitesse de rotation du dispositif de propulsion est plus grande qu'une vitesse de rotation minimale et/ou plus petite qu'une vitesse de rotation maximale.

6. Dispositif de dépollution de gaz d'échappement avec un filtre à particules, en particulier pour la mise en oeuvre du procédé selon l'une quelconque des revendications précédentes, dans lequel il est prévu de déterminer une perte de pression réelle dans le filtre à particules au moyen de capteurs de pression, dans lequel le dispositif de dépollution de gaz d'échappement est conçu pour définir une perte de pression théorique à l'aide d'au moins une grandeur d'état, à savoir un débit massique de gaz d'échappement, dans lequel un quotient de pression est déterminé à l'aide de la perte de pression réelle et de la perte de pression théorique et, dans un mode de fonctionnement de diagnostic, un état du filtre à particules est déduit du quotient de pression, dans lequel une valeur réelle est posée égale à la perte de pression réelle et une valeur théorique est posée égale à la perte de pression théorique, **caractérisé en ce que** la valeur théorique et la valeur réelle sont filtrées par un passe-bande avant la détermination du quotient de pression et sont ensuite débarrassées de leur signe ou élevées au carré, dans lequel ensuite une valeur intégrale théorique en fonction du temps est formée à partir de la valeur théorique et une valeur intégrale réelle en fonction du temps est formée à partir de la valeur réelle et dans lequel le quotient de pression se présente sous forme de quotient de la valeur intégrale réelle et de la valeur intégrale théorique.
